# EUROPEAN PATENT APPLICATION

(11) **EP 3 059 969 A1**
(43) Date of publication of application: **24.08.2016**
(21) Application number: 14854839.9
(22) Date of filing: 20.10.2014
(51) Int. Cl.: H04N 19/597

(54) **METHOD AND APPARATUS FOR CODING/DECODING VIDEO COMPRISING MULTI-VIEW**

(30) Priority: 18.10.2013 US 201361892464 P
(71) Applicant: LG Electronics Inc., Seoul 150-721 (KR)
(72) Inventor: HEO, Jin, Seoul 137-893 (KR); YEA, Sehoon, Seoul 137-893 (KR); KIM, Taesup, Seoul 137-893 (KR); NAM, Junghak, Seoul 137-893 (KR)
(74) Representative: Diehl & Partner GbR
(86) International application number: PCT/KR2014/009853
(87) International publication number: WO 2015/057032

(57) **Abstract**

The present invention provides a method for coding and decoding a video comprising a multi-view. The method for coding a video, according to one embodiment of the present invention, comprises the steps of: determining whether a current block in a current view is to perform a residual prediction; inducing a first reference block and a second reference block used for the residual prediction of the current block, when the current block performs the residual prediction; generating a residual prediction sample value of the current block, based on a difference value between a sample value of the first reference block and a sample value of the second reference block; and inducing a prediction sample value of the current block by using the residual prediction sample value of the current block.

## Description

### BACKGROUND OF THE INVENTION

### Field of the invention

The present invention relates to a video coding technique, and, more particularly, to a 3D video image coding technique.

### Related Art

In recent years, demands for a high-resolution and high-quality video have increased in various fields of applications. However, the higher the resolution and quality video data becomes, the greater the amount of video data becomes.

Accordingly, when video data is transferred using media such as existing wired or wireless broadband lines or video data is stored in existing storage media, the transfer cost and the storage cost thereof increase. High-efficiency video compressing techniques can be used to effectively transfer, store, and reproduce high-resolution and high-quality video data.

On the other hand, with realization of capability of processing a high-resolution/high-capacity video, digital broadcast services using a 3D video have attracted attention as a next-generation broadcast service. A 3D video can provide a sense of realism and a sense of immersion using multi-view channels.

A 3D video can be used in various fields such as free viewpoint video (FVV), free viewpoint TV (FTV), 3DTV, surveillance, and home entertainments.

Unlike a single-view video, 3D video using multi-views have a high correlation between views having the same picture order count POC. Since the same scene is shot with multiple neighboring cameras, that is, multiple views, multi-view videos have almost the same information except for a parallax and a slight illumination difference and thus difference views have a high correlation therebetween.

Accordingly, the correlation between different views can be considered for encoding/decoding a multi-view video, and information need for encoding and/or decoding of a current view can be obtained. For example, a block to be decoded in a current view can be predicted or decoded with reference to a block in different view.

### SUMMARY OF THE INVENTION

The present invention provides a method and apparatus for encoding/decoding a multi-view video.

The present invention provides a method and apparatus for performing a residual prediction in encoding/decoding video including a multi-view.

The present invention provides a method and apparatus for scaling a motion vector when performing a residual prediction in encoding/decoding video including a multi-view.

According to an embodiment of the present invention, a method for encoding a video including a multi-view is provided. The video encoding method includes determining whether a current block within a current view is to perform a residual prediction, inducing a first reference block and a second reference block used for the residual prediction of the current block, in case that the current block performs the residual prediction, generating a residual prediction sample value of the current block based on a difference value between a sample value of the first reference block and a sample value of the second reference block, and inducing a prediction sample value of the current block using the residual prediction sample value of the current block.

The step of inducing the first reference block and the second reference block may include scaling a motion vector used for inducing at least one of the first reference block and the second reference block based on a distance between reference pictures that includes a current picture including the current block and the first reference block or the second reference block.

According to another embodiment of the present invention, a method for decoding a video including a multi-view is provided. The video decoding method includes acquiring residual prediction information that represents whether a residual prediction is performed for a current block within a current view, inducing a first reference block and a second reference block used for the residual prediction of the current block based on the residual prediction information, generating a residual prediction sample value of the current block based on a difference value between a sample value of the first reference block and a sample value of the second reference block, and inducing a prediction sample value of the current block using the residual prediction sample value of the current block.

In the step of inducing the first reference block and the second reference block, at least one of the first reference block and the second reference block may be induced using a motion vector which is scaled based on a distance between reference pictures that includes a current picture including the current block and the first reference block or the second reference block.

The scaled motion vector may be acquired from an encoding apparatus.

### ADVANTAGEOUS EFFECTS

According to the present invention, a coding rate can be increased by scaling a size of motion vector by considering a distance between current picture and a reference picture when performing a residual prediction.

In addition, a complexity of decoder can be decreased by performing scaling a motion vector in an encoder, instead of a decoder, when performing a residual prediction. And decoding rate can be increased since a size of motion vector to encode becomes smaller in an encoder.

### BRIEF DESCRIPTION OF THE DRAWINGS

FIG. 1 is a diagram scheduling describing encoding and decoding processes of a 3D video.
FIG. 2 is a diagram schematically describing a configuration of a video encoding apparatus.
FIG. 3 is a diagram schematically describing a configuration of a video decoding apparatus.
FIG. 4 is a diagram for schematically describing a multi-view video coding to which the present invention can be applied.
FIG. 5 is a diagram for schematically describing a multi-view video coding using a depth map to which the present application can be applied.
FIG. 6 is a diagram for schematically describing a residual prediction method according to an embodiment of the present invention.
FIG. 7 is a flowchart schematically illustrating an encoding method using a residual prediction according to an embodiment of the present invention.
FIG. 8 is a flowchart schematically illustrating a decoding method using a residual prediction according to an embodiment of the present invention.

### DESCRIPTION OF EXEMPLARY EMBODIMENTS

The present invention can be modified in various forms, and specific embodiments thereof will be described and shown in the drawings. However, the embodiments are not intended for limiting the invention. The terms used in the following description are used to merely describe specific embodiments, but are not intended to limit the invention. An expression of a singular number includes an expression of the plural number, so long as it is clearly read differently. The terms such as "include" and "have" are intended to indicate that features, numbers, steps, operations, elements, components, or combinations thereof used in the following description exist and it should be thus understood that the possibility of existence or addition of one or more different features, numbers, steps, operations, elements, components, or combinations thereof is not excluded.

On the other hand, elements in the drawings described in the invention are independently drawn for the purpose of convenience for explanation of different specific functions in an image encoding/decoding apparatus and does not mean that the elements are embodied by independent hardware or independent software. For example, two or more elements of the elements may be combined to form a single element, or one element may be divided into plural elements. The embodiments in which the elements are combined and/or divided belong to the scope of the invention without departing from the concept of the invention.

Hereinafter, exemplary embodiments of the invention will be described in detail with reference to the accompanying drawings. Like constituents in the drawings will be referenced by like reference numerals and will not be repeatedly described.

As used herein, a term "Pixel" or "pel" means a minimum unit constituting a single image. A term "Sample" may be used as a term representing a value of a specific pixel. In this connection, the sample may indicate a pixel value of a luma component and/or a pixel value of a chroma component.

As used herein, a term "Unit" means a basic unit for image processing and/or a specific position in an image. The unit may be used interchangeably with terms such as "block", "area", or the like. Generally, a MxN block refers to a set of samples or transform coefficients arranged in M columns and N rows.

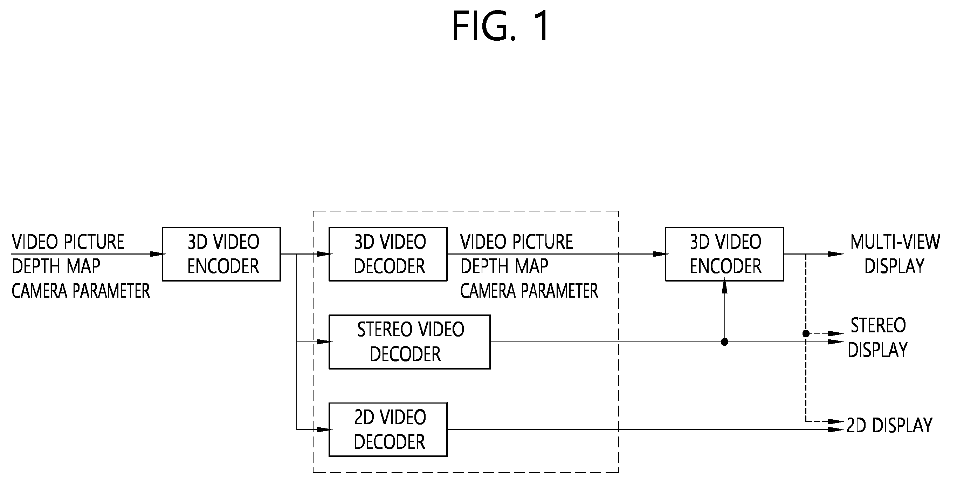

FIG. 1 is a diagram scheduling describing encoding and decoding processes of a 3D video.

Referring to FIG. 1, a 3 video encoder encodes a video picture and a depth map and a camera parameter to output the same as a bitstream.

The depth map may be constituted by distance information (depth information) between a camera and a subject with respect to a pixel of the corresponding video picture (texture picture). For example, the depth map may be a picture acquired by normalizing the depth information according to a bit depth. In this case, the depth map may be constituted by the depth information recorded without expression of a chrominance.

In general, since a distance from the subject and a disparity are in inverse proportion to each other, disparity information indicating a correlation between views may be induced from the depth information of the depth map by using the camera parameter.

A bitstream including the depth map and camera information together with a general color picture, that is, the video picture (texture picture) may be transmitted to a decoder through a network or a storage medium.

The decoder receives the bitstream to reconstruct the video. When a 3D video decoder is used as the decoder, the 3D video decoder may decode the video picture, and the depth map and the camera parameter from the bitstream. Views required for a multi-view display may be synthesized based on the decoded video picture, depth map, and camera parameter. In this case, when the used display is a stereo display, the 3D picture may be displayed by using two pictures among the reconstructed multi-views.

When the stereo video decoder is used, the stereo video decoder may reconstruct two pictures to be incident in both eyes from the bitstream. The stereo display may display a 3D picture by using a view difference or disparity between a left picture incident in a left eye and a right picture incident in a right eye. When the multi-view display is used together with the stereo video decoder, the multi-views may be displayed by generating other views based on the two reconstructed pictures.

When a 2D decoder is used, a 2D picture is reconstructed to output the picture through a 2D display. The 2D display is used, but when the 3D video decoder or the stereo video decoder is used as the decoder, one of the reconstructed pictures may be output through the 2D display.

In the configuration of FIG. 1, the view synthesis may be performed by the decoder or the display. Further, the decoder and the display may be one apparatus or separate apparatuses.

In FIG. 1, for easy description, it is described that the 3D video decoder, the stereo video decoder, and the 2D video decoder are separate decoders, but one decoding apparatus may perform all 3D video decoding, stereo video decoding, and 2D video decoding. Further, a 3D video decoding apparatus may perform the 3D video decoding, a stereo video decoding apparatus may perform the stereo video decoding, and a 2D video decoding apparatus may perform the 2D video decoding. Furthermore, the multi-view display may output a 2D video or a stereo video.

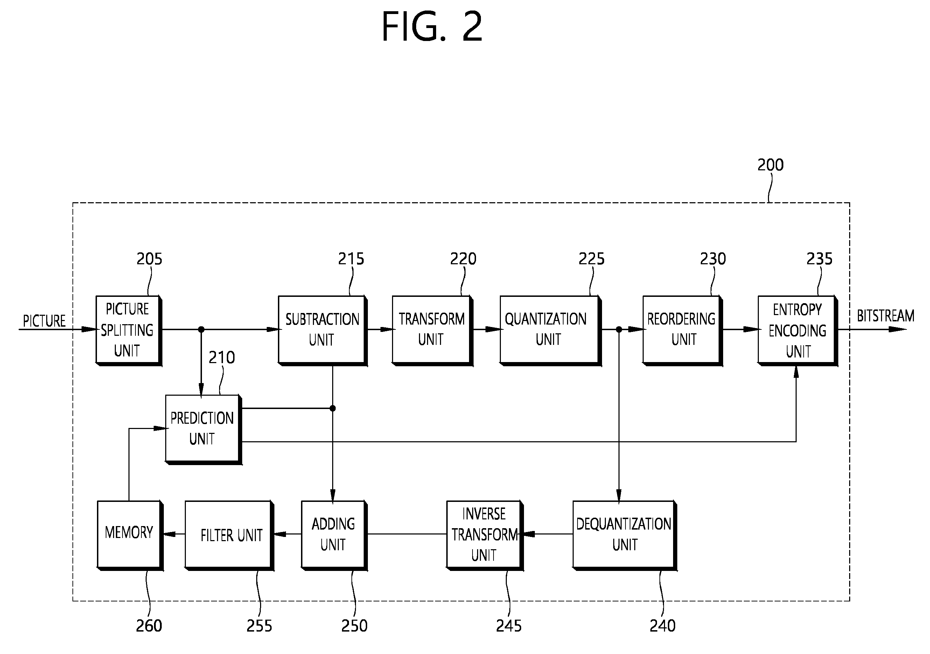

FIG. 2 is a diagram schematically describing a configuration of a video encoding apparatus.

Referring to FIG. 2, the video encoding apparatus 200 includes a picture splitting unit 205, a prediction unit 210, a subtraction unit 215, a transform unit 220, a quantization unit 225, a reordering unit 230, an entropy encoding unit 235, an dequantization unit 240, an inverse transform unit 245, an adding unit 250, a filter unit 255, and a memory 260.

The picture splitting unit 05 may split an input picture into at least one processing unit block. In this case, the processing unit block may be a coding unit block, a prediction unit block, or a transform unit block. The coding unit block as a unit block of coding may be split from a maximum coding unit block according to a quad tree structure. The prediction unit block as a block partitioned from the coding unit block may be a unit block of sample prediction. In this case, the prediction unit block may be divided into sub blocks. The transform unit bock as the coding unit block may be split according to the quad tree structure and may be a unit block to induce a transform coefficient or a unit block to induce a residual signal from the transform coefficient.

As used herein, for the sake of convenience of illustration, a coding unit block is referred to as a coding block or a coding unit. A prediction unit block is referred to as a prediction block or a prediction unit. A transform unit block is referred to as a transform block or a transform unit.

The prediction block or the prediction unit may mean a block-shape specific area or an array of the prediction sample. Further, the transformation block or the transform unit may mean the block-shape specific area or an array of the transform coefficient or a residual sample.

The prediction unit 210 may perform a prediction for a processing target block (hereinafter, referred to as a current block) and generate the prediction block including prediction samples for the current block. A unit of the prediction performed by the prediction unit 210 may be the coding block, the transformation block, or the prediction block.

The prediction unit 210 may decide whether an intra prediction is applied to the current block or whether an inter prediction is applied to the current block.

In the case of the intra prediction, the prediction unit 210 may induce the prediction sample for the current block based on a neighbor block pixel in a picture (hereinafter, a current picture) to which the current block belongs. In this case, the prediction unit 210 may (i) induce the prediction sample based an average or an interpolation of neighbor reference samples of the current block or (ii) induce the prediction sample based on a reference sample which is present in a specific direction with respect to a prediction target pixel among neighbor blocks of the current block. For easy description, the case of (i) is referred to as a non-directional mode and the case of (ii) is referred to as a directional mode. The prediction unit 210 may decide a prediction mode applied to the current block by using the prediction mode applied to the neighbor block.

In the case of the inter prediction, the prediction unit 210 may induce the prediction sample for the current block based on samples specified by a motion vector on a collocated picture. The prediction unit 10 applies any one of a skip mode, a merge mode, and an MVP mode to induce the prediction sample for the current block. In the cases of the skip mode and the merge mode, the prediction unit 210 may use motion information of the neighbor block as the motion information of the current block. In the case of the skip mode, a difference (residual) between the prediction sample and an original sample is not transmitted unlike the merge mode. In the case of the MVP mode, the motion vector of the neighbor block is used as a motion vector predictor (MVP) to induce the motion vector of the current block.

In the case of the inter prediction, the neighbor block includes a spatial neighbor block which is present in the current picture and a spatial neighbor block which is present in the collocated picture. The motion information includes the motion vector and the collocated picture. In the skip mode and the merge mode, when the motion information of the spatial neighbor block is used, a highest picture on a collocated picture list may be used as the collocated picture.

In the case of encoding a dependent view, the prediction unit 210 may perform an inter-view prediction.

The prediction unit 210 may configure the collocated picture list including a picture of another view. For the inter-view prediction, the prediction unit 210 may induce a disparity vector. Unlike a motion vector specifying a block corresponding to the current block in another picture in a current view, the disparity vector may specify a block corresponding to the current block in another view of the same access unit as the current picture.

The prediction unit 210 may specify a depth block in a depth view based on the disparity vector and perform a configuration of a merge list, an inter-view motion prediction, an illumination compensation (IC), view synthesis, and the like.

The disparity vector for the current block may be induced from a depth value by using the camera parameter or induced from the motion vector or disparity vector of the neighbor block in the current or another view.

For example, the prediction unit 210 may add to a merge candidate list an inter-view merging candidate (IvMC) corresponding to spatial motion information of a reference view, an inter-view disparity vector candidate (IvDC) corresponding to the disparity vector, a shifted IvMC induced by a shift of the disparity, a texture merging candidate (T) induced from a texture corresponding to a case in which the current block is a block on the depth map, a disparity derived merging candidate (D) derived from the texture merging candidate by using the disparity, a view synthesis prediction merge candidate (VSP) derived based on the view synthesis, and the like.

In this case, the number of candidates included in a merge candidate list applied to the dependent view may be limited to a predetermined value.

Further, the prediction unit 210 may predict the motion vector of the current block based on the disparity vector by applying the inter-view motion vector prediction. In this case, the prediction unit 210 may derive the disparity vector based on conversion of a maximum depth value in the corresponding depth block. When a position of the reference sample in the reference view is specified by adding the disparity vector to a sample position of the current block in the reference view, a block including the reference sample may be used as the reference block. The prediction unit 210 may use the motion vector of the reference block as a candidate motion parameter or a motion vector predictor candidate of the current block and use the disparity vector as a candidate disparity vector for the DCP.

The subtraction unit 215 generates the residual sample which is the difference between the original sample and the prediction sample. When the skip mode is applied, the subtraction unit 215 may not generate the residual sample as described above.

The transform unit 210 generates the transform coefficient by using transforming the residual sample by the unit of the transform block. The quantization unit 225 quantizes the transform coefficients to generate quantized transform coefficients.

The reordering unit 230 reorders the quantized transform coefficients. The reordering unit 230 may reorder the block-shape quantized transform coefficients in a 1D vector shape through a scanning method.

The entropy encoding unit 235 may perform entropy-encoding of the quantized transform coefficients. As the entropy encoding, encoding methods including, for example, exponential Golomb, context-adaptive variable length coding (CAVLC), context-adaptive binary arithmetic coding (CABAC), and the like may be used. The entropy encoding unit 235 may encode information (e.g., a value of a syntax element, and the like) required for video reconstruction together or separately in addition to the quantized transform coefficients.

The entropy-encoded information may be transmitted or stored by the unit of a network abstraction layer as the form of the bitstream.

The dequantization unit 240 dequantizes the quantized transform coefficient to generate the transform coefficient. The inverse transform unit 245 inversely transforms the transform coefficient to generate the residual sample.

The adding unit 250 adds the residual sample and the prediction sample to reconstruct the picture. The residual sample and the prediction sample are added to each other by the unit of the block to generate a reconstruction block. Herein, the adding unit 250 is described as a separate component, but the adding unit 250 may be a part of the prediction unit 210.

The filter unit 255 may apply a deblocking filter and/or offset to the reconstructed picture. Distortion during an artifact or a quantization process of a block boundary in the reconstructed picture may be corrected through the deblocking filtering and/or offset. The offset may be applied by the unit of the sample and applied after the process of the deblocking filtering is completed.

The memory 260 may store the reconstructed picture or information required for encoding/decoding. For example, the memory 60 may store pictures used for the inter prediction/inter-view prediction. In this case, the pictures used for the inter prediction/inter-view prediction may be designated by a collocated picture set or a collocated picture list.

Herein, it is described that one encoding apparatus encodes an independent view or the dependent view, but this is for easy description and a separate encoding apparatus is configured for each view or a separate internal module (for example, a prediction unit for each view) may be configured for each view.

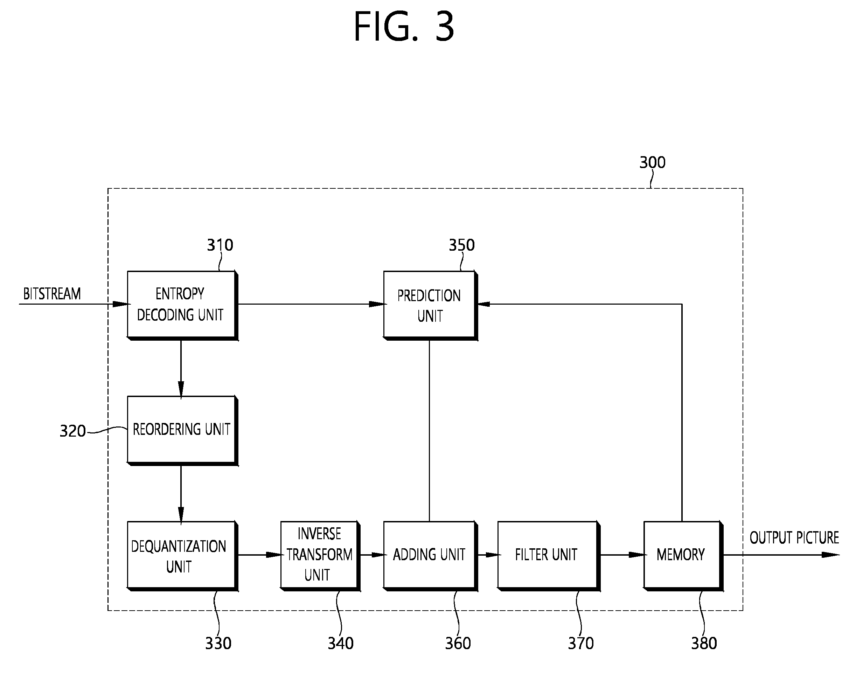

FIG. 3 is a diagram schematically describing a configuration of a video decoding apparatus.

Referring to FIG. 3, the video decoding apparatus 300 includes an entropy decoding unit 310, a reordering unit 320, a dequantization unit 330, an inverse transform unit 340, a prediction unit 350, an adding unit 360, a filter unit 370, and a memory 380.

When a bitstream including video information is input, the video decoding apparatus 300 may reconstruct a video to correspond to a process in which the video information is processed by the video encoding apparatus.

For example, the video decoding apparatus 300 may perform video decoding by using the processing unit applied in the video encoding apparatus. In this case, the processing unit block of the video decoding may be the coding unit block, the prediction unit block, or the transform unit block. The coding unit block as a unit block of decoding may be split from the maximum coding unit block according to the quad tree structure. The prediction unit block as the block partitioned from the coding unit block may be the unit block of sample prediction. In this case, the prediction unit block may be divided into sub blocks. The transform unit bock as the coding unit block may be split according to the quad tree structure and may be a unit block to derive a transform coefficient or a unit block to derive a residual signal from the transform coefficient.

The entropy decoding module 310 may parse a bitstream and output information required to recover a video or picture. For example, the entropy decoding module 310 may decode information in the bitstream based on an expotential-Golomb, CAVLC, CABAC , etc., and output a syntax element value for video recovery, a quantized value of a transform coefficient for a residual.

When a plurality of views is processed in order to reproduce the 3D video, the bitstream may be input for each view. Alternatively, information on the respective views may be multiplexed in the bitstream. In this case, the entropy decoding unit 310 demultiplexes the bitstream to parse the de-multiplexed bitstream for each view.

The reordering unit 320 may reorder the quantized transform coefficients in the 2D block form. The reordering unit 320 may perform reordering to correspond to coefficient scanning performed by the encoding apparatus.

The dequantization unit 330 dequantizes the quantized transform coefficients based on (de)quantized parameters to output the transform coefficients. Information for deriving the quantized parameters may be signaled from the encoding apparatus.

The inverse transform unit 340 inversely transforms the transform coefficients to derive the residual samples.

The prediction unit 350 may perform a prediction for the current block and generate the prediction block including prediction samples for the current block. A unit of the prediction performed by the prediction unit 350 may be the coding block, the transformation block, or the prediction block.

The prediction unit 350 may decide whether the intra prediction is applied to the current block or whether the inter prediction is applied to the current block. In this case, a unit for deciding which the intra prediction or the inter prediction is applied and a unit for generating the prediction sample may be different from each other. Moreover, the units for generating the prediction sample in the inter prediction and the intra prediction may also be different from each other.

In the case of the intra prediction, the prediction unit 350 may derive the prediction sample for the current block based on the neighbor block pixel in the current picture. The prediction unit 350 may derive the prediction sample for the current block by applying the directional mode or the non-directional mode based on neighbor reference blocks of the current block. In this case, the prediction mode to be applied to the current block may be decided by using an intra prediction mode of the neighbor block.

In the case of the inter prediction, the prediction unit 350 may derive the prediction sample for the current block based on the samples specified by the motion vector on the collocated picture. The prediction unit 10 applies any one of the skip mode, the merge mode, and the MVP mode to derive the prediction sample for the current block.

In the cases of the skip mode and the merge mode, the prediction unit 350 may use the motion information of the neighbor block as the motion information of the current block. In this case, the neighbor block may include a spatial neighbor block and a temporal neighbor block.

The prediction unit 350 may configure the merge candidate list as motion information of an available neighbor block and information indicated by a merge index on the merge candidate list may be used as the motion vector of the current block. The merge index may be signaled from the encoding apparatus. The motion information includes the motion vector and the collocated picture. In the skip mode and the merge mode, when the motion information of the temporal neighbor block is used, the highest picture on the collocated picture list may be used as the collocated picture.

In the case of the skip mode, the difference (residual) between the prediction sample and the original sample is not transmitted unlike the merge mode.

In the case of the MVP mode, the motion vector of the neighbor block is used as the motion vector predictor (MVP) to derive the motion vector of the current block. In this case, the neighbor block may include the spatial neighbor block and the temporal neighbor block.

In the case of encoding the dependent view, the prediction unit 350 may perform the inter-view prediction. In this case, the prediction unit 350 may configure the collocated picture list including the picture of another view.

For the inter-view prediction, the prediction unit 350 may derive the disparity vector. The prediction unit 350 may specify the depth block in the depth view based on the disparity vector and perform the configuration of the merge list, the inter-view motion prediction, the illumination compensation (IC), the view synthesis, and the like.

The disparity vector for the current block may be derived from the depth value by using the camera parameter or derived from the motion vector or disparity vector of the neighbor block in the current or another view. The camera parameter may be signaled from the encoding apparatus.

When the merge mode is applied to the current block of the dependent view, the prediction unit 350 may add to the merge candidate list IvDC corresponding to the temporal motion information of the reference view, IvDC corresponding to the disparity vector, shift IvMC derived by the shift of the disparity vector, the texture merge candidate (T), derived from the texture corresponding to the case in which the current block is the block on the depth map, the disparity derive merge candidate (D) derived from the texture merge candidate by using the disparity, the view synthesis prediction merge candidate (VSP) derived based on the view synthesis, and the like.

In this case, the number of candidates included in the merge candidate list applied to the dependent view may be limited to a predetermined value.

Further, the prediction unit 350 may predict the motion vector of the current block based on the disparity vector by applying the inter-view motion vector prediction. In this case, the prediction unit 350 may use the block in the reference view specified by the disparity vector as the reference block. The prediction unit 350 may use the motion vector of the reference block as the candidate motion parameter or the motion vector predictor candidate of the current block and use the disparity vector as the candidate disparity vector for the DCP.

The adding unit 360 adds the residual sample and the prediction sample to reconstruct the current block or the current picture. The adding unit 360 adds the residual sample and the prediction sample by the unit of the block to reconstruct the current picture. When the skip mode is applied, since the residual is not transmitted, the prediction sample may become a reconstruction sample. Herein, the adding unit 360 is described as a separate component, but the adding unit 360 may be a part of the prediction unit 350.

The filter unit 370 may apply the deblocking filtering and/or offset to the reconstructed picture. In this case, the offset may be adaptively applied as the offset of the sample unit.

The memory 380 may store the reconstructed picture or information required for decoding. For example, the memory 380 may store pictures used for the inter prediction/inter-view prediction. In this case, the pictures used for the inter prediction/inter-view prediction may be designated by the collocated picture set or the collocated picture list. The reconstructed picture may be used as the collocated picture.

Further, the memory 380 may output the reconstructed pictures according to an output order. In order to reproduce the 3D picture, although not illustrated, an output unit may display a plurality of different views.

In the example of FIG. 3, it is described that one decoding apparatus decodes the independent view and the dependent view, but this is for easy description and the present invention is not limited thereto. For example, each decoding apparatus may operate for each view and one decoding apparatus may include an operating unit (for example, a prediction unit) corresponding to each view therein.

A multi-view video coding may increase a video coding rate for a current view by coding a current picture using coded data of other views included in an access unit (AU) which is the same as the current picture. Here, the AU may mean a set of pictures of which a picture order count (POC) is the same. The POC corresponds to an order of display of pictures.

In the multi-view coding, views may be coded in the unit of AU, otherwise pictures may be coded in the unit of view. Coding is performed among views according to a predetermined order. A view which is coded the first may be referred to a base view or an independent view. In addition, a view that can be coded by reference to other views after the independent view is coded may be referred to a dependent view.

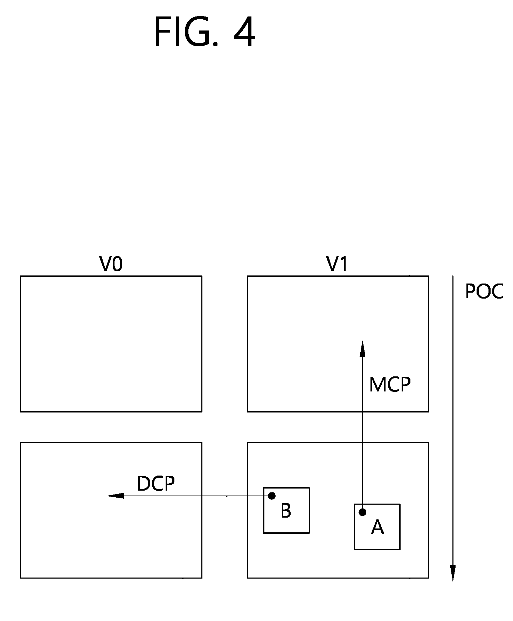

FIG. 4 is a diagram for schematically describing a multi-view video coding to which the present invention can be applied.

In case of coding a multi-view video, pictures of which view IDs are different and the POCs are the same within an AU are coded according to a predefined view coding order.

For example, as shown in FIG. 4, assuming that two views view V0 and view V1 are coded and the view coding order is in an order of view V0 and view V1, the V0 which is a view the first is a base view or an independent view, and the V1 which is coded the next is a dependent view.

The base view is coded by referring to a picture included in the base view, not referring to other views. The dependent view is coded next to the base view, and coded by referring to other views that are already coded.

In the multi-view video coding, a CU included in the dependent view may perform an inter-prediction by referring to pictures that are already coded. At the moment, a method of performing prediction by referring to pictures of which view IDs are the same is referred to a motion compensated prediction (MCP), and a method of performing prediction by referring to other pictures of which view IDs are different within the same AU is referred to a disparity compensated prediction (DCP).

For example, referring to FIG. 4, block A may induce prediction samples by performing the MCP by referring to a picture included in the view V1 which is the same as block A. Block B may induce prediction samples by performing the DCP by referring to a picture of the view V0 which is different from block B.

As described above, in the multi-view video coding, the dependent view may coded by referring to a picture of other view. Furthermore, the dependent view may be coded by using a depth map.

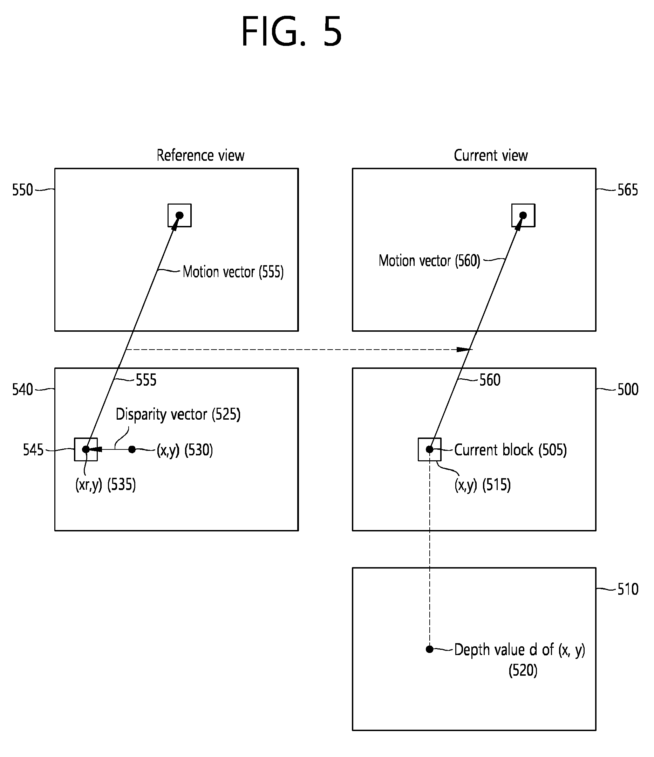

FIG. 5 is a diagram for schematically describing a multi-view video coding using a depth map to which the present application can be applied.

Referring to FIG. 5, a block (current block) 505 of a current picture 500 within a current view may be coded (encoded/decoded) by using a depth map 510. At the moment, a depth value d for the current block 505 may be acquired from a location (x, y) of a sample 520 within the depth map 510 that corresponds to a location (x, y) of a sample 515 within the current block 505. The acquired depth value d may be transformed to a disparity vector 525. The depth value d may be induced based on a distance between a sample (pixel) and a camera.

By adding the disparity vector 525 to a location (x, y) of a sample 530 of a current picture 540 within a reference view that corresponds to the location (x, y) of the sample 515 within the current block 505, a location of a reference block 535 of the current picture 540 may be determined. The disparity vector may have only an x axis component. Accordingly, the disparity vector value may be (disp, 0), and the location (x, y) of the reference block 535 may be determined to be (x+disp, y).

At the moment, a motion parameter of a reference block 545 that includes the reference sample 535 may be used as a candidate of a motion parameter of the current block 505. For example, if a reference picture 550 within a reference view is a reference picture for the reference block 545, a motion vector 555 of the reference block 545 may be induced from a motion vector 560 of the current block 505.

Meanwhile, in the multi-view video coding, in order to increase a coding rate of residual signals, a residual value of a current block may be predicted by using residual correlation between views.

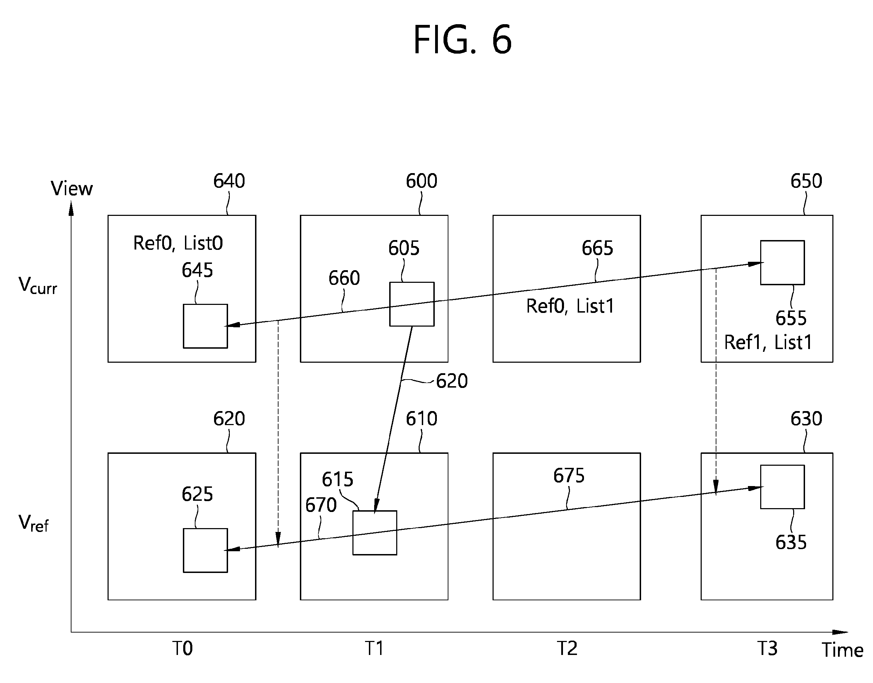

FIG. 6 is a diagram for schematically describing a residual prediction method according to an embodiment of the present invention.

The method of FIG. 6 may be performed by a video encoding apparatus of FIG. 2 and a video decoding apparatus described above. More particularly, the method of FIG. 6 may be performed by a prediction unit of the video encoding apparatus and the video decoding apparatus.

Referring to FIG. 6, in case of performing a residual prediction of a current block 605 in a current picture 600 within a current view V_{curr}, reference blocks (reference samples) used for the residual prediction of the current block 605 are induced, residual prediction samples for the current block 605 may be generated based on the induced residual of the reference blocks.

Here, the reference blocks for the residual prediction may be changed according to whether the current block 605 is an inter-prediction which is predicted from a temporal reference picture or an inter-view prediction which is predicted from an inter-view reference picture.

First, the residual prediction method for the case that the current block is inter-predicted will be described.

In case that the current block 605 is inter-predicted, first, a prediction unit may induce a correspondence block 615 within a reference view V_{ref} that corresponds to the current block 605.

The correspondence block 615 may be induced from a picture 610 that belongs to a reference view of the current block 605 among the pictures within the AU which is the same as the current block. A location of the correspondence block 615 may be specified by using a disparity vector 620 in the picture 610.

At the moment, the correspondence block 615 may be used as a first reference block rpBlock or rpSamples for the residual prediction of the current block 605.

Next, the prediction unit may induce the reference picture 620 or 630 of the correspondence block 615 within a reference view, and the reference block 625 or 635 may be induced from the reference picture 620 or 630 of the induced correspondence block 615.

At the moment, the reference block 625 or 635 may be used as a second reference block rpRefBlock or rpReSamples for the residual prediction of the current block 605.

As the reference picture 620 or 630 of the correspondence block 615, a picture that has a POC value that is the same as a reference picture 640 or 650 of the current block 605 within the current view may be selected, or a reference picture within a reference picture list used for the residual prediction of the current block 605 may be selected.

The reference block 625 or 635 of the correspondence block 615 may be specified by performing motion compensation by using motion information of the current block 605 from the reference picture 620 or 630 of the correspondence block 615, for example, a motion vector 660 or 665 of the current block 605.

Here, the reference picture 640 of the current block 605 is a picture that is available to be referred in forward-directional (LO) when performing inter-prediction, for example, may be a picture specified by reference picture index Ref0 within a prediction picture list LO. The reference picture 650 of the current block 605 is a picture that is available to be referred in backward-directional when performing inter-prediction, for example, may be a picture specified by reference picture index Ref1 within a prediction picture list L1.

Next, a prediction unit may use a difference between the first reference block rpBlock and the second reference block rpRefBlock which is induced for the residual prediction as described above as a residual prediction sample value of the current block 605. For example, a sample value of the reference block 625 or 635 subtracted from a sample value of the correspondence block 615 may be induced as a residual prediction sample value of the current block 605.

In case that the residual prediction is applied, a prediction sample value of the current block 605 may be modified based on a residual prediction sample value of the current block 605. At the moment, a weighing factor may be applied to the residual prediction sample value of the current block 605.

The weighting factor may be a value either one of 0, 0.5 or 1. The weighting factor 0 may indicate that the residual prediction is not applied. Index information indicating which weighing factor can be applied may be transmitted from an encoder to a decoder as a block unit.

Hereinafter, a residual prediction method will be described in case that the current block 605 is inter-view predicted.

In case that the current block 605 is inter-view predicted, a prediction unit may induce the correspondence block 615 that corresponds to the current block 605 within the reference view.

As described above, the correspondence block 615 may be induced from the picture 610 that belongs to a reference view of the current block 605 of the pictures within the same AU with the current block 605. At the moment, a location of the correspondence block 615 may be specified by using a disparity vector 620 of the current block 605 within the picture 610 of the reference view.

Subsequently, the prediction unit may induce the reference picture 620 or 630 of the correspondence block 615, and may induce the reference block 625 or 635 from the reference picture 620 or 630 of the induced correspondence block 615.

At the moment, the reference block 625 or 635 may be used as a first reference block rpBlock or rpSamples for the residual prediction of the current block 605.

As the reference picture 620 or 630 of the correspondence block 615, a picture that has a POC value that is the same as a reference picture 640 or 650 of the current block 605 within the current view may be selected, or a reference picture within a reference picture list for the reference view used for the residual prediction of the current block 605 may be selected.

The reference block 625 or 635 of the correspondence block 615 may be specified by performing motion compensation by using a motion vector mvT (temporal motion vector) 670 or 675 of the correspondence block 615.

Next, the prediction unit may induce the reference picture 640 or 650 within the current view, and induce a reference block 645 or 655 within the reference picture 640 or 650.

At the moment, the reference block 645 or 655 may be used as the second reference block rpReBlock or rpRefSamples for the residual prediction of the current block 605.

The reference picture 640 or 650 within the current view may be a picture that has the same POC as the reference picture 620 or 630 of the correspondence block 615 within the reference view.

The reference block 645 or 655 within the current view may be specified within the reference picture 640 or 650 within the current view by using a motion vector 670 or 675 of the correspondence block 615.

Here, the reference picture 620 of the correspondence block 615 is a picture that is available to be referred in forward-directional (LO) when performing inter-prediction, for example, may be a picture specified by reference picture index Ref0 within a prediction picture list LO. The reference picture 630 of the correspondence block 615 is a picture that is available to be referred in backward-directional when performing inter-prediction, for example, may be a picture specified by reference picture index Ref1 within a prediction picture list L1.

Next, a prediction unit may use a difference between the first reference block rpBlock and the second reference block rpRefBlock which is induced for the residual prediction as described above as a residual prediction sample value of the current block 605. For example, a sample value of the reference block 625 or 635 subtracted from a sample value of the correspondence block 615 may be induced as a residual prediction sample value of the current block 605.

In case that the residual prediction is applied, a prediction sample value of the current block 605 may be modified based on a residual prediction sample value of the current block 605. At the moment, a weighing factor may be applied to the residual prediction sample value of the current block 605.

As described above, the weighting factor may be a value either one of 0, 0.5 or 1. The weighting factor 0 may indicate that the residual prediction is not applied. Index information indicating which weighing factor can be applied may be transmitted as a block unit.

The residual prediction may not be applied in case there is no motion vector such as a DCP block or a block in an inter mode.

In case that a location of the first reference block rpBlock and the second reference block rpRefBlock induced for the residual prediction is a sub-sample location (sample location of sub-integer unit), not an integer sample location, the samples of the first reference block rpBlock and the second reference block rpRefBlock may be acquired by performing an interpolation using a bi-linear filter.

In case that the residual prediction described above is performed, the prediction unit may perform scaling a motion vector based on a distance between a reference picture and a current picture, and induce reference blocks that are used for the residual prediction using the scaled motion vector. At the moment, the distance between the reference picture and the current picture may be a value of POC difference.

For example, a distance between the reference picture 620 or 630 of the correspondence block 615 and the current picture 600 is greater than a specific value, the residual prediction may be performed by inducing reference blocks for the residual prediction after scaling the motion vector 660 or 665 of the current block 605 or the motion vector 670 or 675 of the correspondence block 615. At the moment, the specific value may be according to the case that the distance between pictures (i.e., POC difference between pictures) is 1, and in case that the reference picture 620 or 630 of the correspondence block 615 is the nearest picture to the current picture 600, the distance from the current picture 600 maybe 1.

Since the residual prediction has high complexity, the complexity may be decreased in case of using a picture adjacent to the current picture as a reference picture. Accordingly, in case that a distance between the current picture and the reference picture is greater than 1, by scaling a size of motion vector by considering the distance between the current picture and the reference picture, efficient residual prediction may be performed.

For example, scaling of motion vector may be applied to a picture (temporal reference picture) that has the smallest value of POC difference with the current picture within a reference picture list.

The scaling of motion vector performed when performing the residual prediction according to the present invention may be performed in an encoder, instead of a decoder.

More particularly, an encoder may perform scaling a motion vector considering a distance between the reference picture 620 or 630 of the correspondence block 615 and the current picture 600, and induce reference blocks rpBlock and rpRefBlock used for the residual prediction using the scaled motion vector. At the moment, the encoder may encode the scaled motion vector, and transmit the encoded information (scaled motion vector) to a decoder.

In the decoder, the encoded motion vector which is scaled is decoded, and the decoded motion vector which is scaled may be used when performing the residual prediction as it is.

As described above, since the motion vector is scaled in the encoder and this is decoded, complexity of decoder may be decreased (generally, the complexity of decoder is bigger problem than the complexity of encoder). In addition, since a motion vector is scaled in the encoder, the size of motion vector which is to be encoded becomes smaller, thereby the encoding rate being increased.

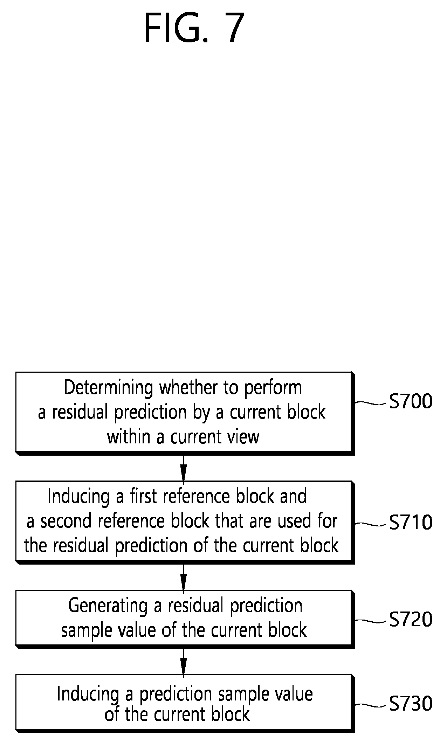

FIG. 7 is a flowchart schematically illustrating an encoding method using a residual prediction according to an embodiment of the present invention. The method of FIG. 7 may be performed by the video encoding apparatus of FIG. 2.

Referring to FIG. 7, an encoding apparatus determines whether to perform a residual prediction by a current block within a current view (step, S700).

In other words, the encoding apparatus may determine whether the residual prediction of the current block is used during a decoding procedure, and encode the determined information, and transmit this to a decoding apparatus.

For example, if the encoding apparatus determines it is efficient to use the residual prediction in an aspect of rate-distortion (RD) cost, the encoding apparatus may configure the residual prediction flag that indicates whether the residual prediction is used during the decoding procedure as 1, and transmit this to the decoding apparatus. Otherwise, if the encoding apparatus determines it is better not to use the residual prediction, the encoding apparatus may configure the residual prediction flag as 0, and transmit this to the decoding apparatus.

In case that the encoding apparatus determines to perform the residual prediction of the current block, the encoding apparatus induces a first reference block and a second reference block that are used for the residual prediction of the current block (step, S710).

At the moment, according to whether the current block is an inter-predicted block or an intra-predicted block, inducing processes of inducing the first reference block and the second reference block may be different.

In case that the current block is inter-predicted, the encoding apparatus may induce the first reference block from a correspondence picture within a reference view using a disparity vector of the current block. A location of the first reference block may be specified within the correspondence picture according to the disparity vector.

The correspondence picture is referred to a picture within the reference view among the pictures that belongs to an AU which is the same as the current picture that includes the current block. In other words, the correspondence picture is a picture within the reference view that has a POC value which is the same as the current picture.

The encoding apparatus may induce the second reference block from the reference picture within the reference view using the motion vector of the current block.

The reference picture within the reference view may be a picture within the reference view that has a POC value which is the same as the current picture, or a reference picture within a reference picture list used for the residual prediction.

When inducing the second reference block, the encoding apparatus may perform scaling a motion vector of the current block based on a distance between reference pictures that include that current picture and the second reference block, and then, induce the second reference block by using the scaled motion vector.

For example, if a distance between the current picture and the reference picture is greater than a specific value (e.g., 1), a size of motion vector of the current block may be scaled. If the specific value is 1, the size of motion vector may be scaled for the reference picture within the reference view that has a POC value which is the very previous or later of the current picture. And by performing motion compensation from the reference picture within the reference view that has a POC value which is the very previous or later of the current picture using the scaled motion vector, the second reference block may be acquired. Otherwise, the size of motion vector may be scaled for the picture (temporal reference picture) that has the smallest POC difference value from the current picture within the reference picture list.

In case that the locations of the first reference block and the second reference block induced as described above is a sub-sample location, the encoding apparatus may perform interpolation using a bi-linearly filter for the first reference block and the second reference block.

The encoding apparatus may encode the scaled motion vector which is used for inducing the second reference block, and transmit the encoded information (scaled motion vector) to the decoding apparatus.

In case that the current block is inter-view predicted, the encoding apparatus may induce the correspondence block from the correspondence picture within the reference view by using a disparity vector of the current block.

The correspondence picture is referred to a picture within the reference view among the pictures that belongs to an AU that is the same as the current picture that includes the current block. In other words, the correspondence picture is a picture within the reference view that has a POC value that is the same as the current picture.

A location of the correspondence picture may be specified within the correspondence picture by a disparity vector.

The encoding apparatus may induce the first reference block from the reference picture within the reference view by using a motion vector of the correspondence block, and induce the second reference block from the reference picture within the current view by using a motion vector of the correspondence block.

The reference picture within the reference view may be a picture within the reference view that has a POC value that is the same as the reference picture of the current block, otherwise, may be a reference picture within a reference picture list for the reference view that is used for the residual prediction.

The reference picture within the current view may be a picture within the current view that has a POC value that is the same as the reference picture within the reference view.

When inducing the first reference block, the encoding apparatus may perform scaling a motion vector of the current block based on a distance between reference pictures that include that current picture and the first reference block, and then, induce the first reference block by using the scaled motion vector. At the moment, the second reference block may also be induced from the reference picture within the current view by using the scaled motion vector.

For example, if a distance between the current picture and the reference picture is greater than a specific value (e.g., 1), a size of motion vector of the current block may be scaled. If the specific value is 1, the size of motion vector may be scaled for the reference picture within the reference view that has a POC value which is the very previous or later of the current picture. And by performing motion compensation from the reference picture within the reference view that has a POC value which is the very previous or later of the current picture using the scaled motion vector, the first reference block may be acquired. Otherwise, the size of motion vector may be scaled for the picture (temporal reference picture) that has the smallest POC difference value from the current picture within the reference picture list.

In case that the locations of the first reference block and the second reference block induced as described above is a sub-sample location, the encoding apparatus may perform interpolation using a bi-linearly filter for the first reference block and the second reference block.

The encoding apparatus may encode the scaled motion vector which is used for inducing the first reference block, and transmit the encoded information (scaled motion vector) to the decoding apparatus.

The encoding apparatus generates a residual prediction sample value of the current block based on a difference value between a sample value of the first reference block and a sample value of the second reference block (step, S720).

At the moment, a weighing factor may be applied to the residual prediction sample value of the current block. The weighting factor may be a value either one of 0, 0.5 or 1. The weighting factor 0 may indicate that the residual prediction is not applied. Index information indicating which weighing factor can be applied may be transmitted as a block unit.

The encoding apparatus induces a prediction sample value of the current block using the residual prediction sample value of the current block (step, S730).

The encoding apparatus may acquire a restoration sample value for the current block based on the induced prediction sample value of the current block.

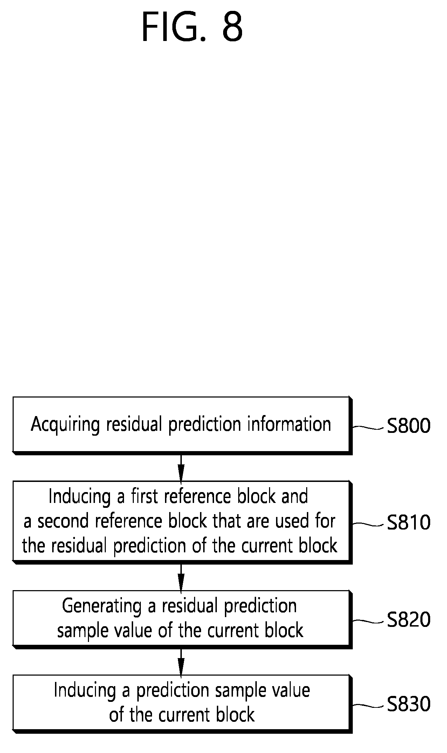

FIG. 8 is a flowchart schematically illustrating a decoding method using a residual prediction according to an embodiment of the present invention. The method of FIG. 8 may be performed by the video decoding apparatus of FIG. 3 described above.

Referring to FIG. 8, a decoding apparatus acquires residual prediction information that represents whether the residual prediction is performed for the current block within the current view (step, S800).

The residual prediction information may be a flag. For example, it may be that flag value 1 represents that the residual prediction is applied to the current block and flag value 0 represents that the residual prediction is not applied to the current block.

The decoding apparatus induces a first reference block and a second reference block used for the residual prediction of the current block based on the residual prediction information (step, S810).

At the moment, according to whether the current block is an inter-predicted block or an inter-view predicted block, a procedure for inducing the first reference block and the second reference block may be different.

Whether the current block is an inter-predicted block or an inter-view predicted block may be determined using a POC difference value between the current picture and a reference picture. For example, if the POC difference value between the current picture and the reference picture is not 0, it may be determined that the current block is an inter-predicted block, and if the POC difference value between the current picture and the reference picture is 0, it may be determined that the current block is an inter-view predicted block.

Since the procedure for inducing the first reference block and the second reference block according to whether the current block is an inter-predicted block or an inter-view predicted block is described in detail in the embodiments of FIG. 6 and FIG. 7, it will be briefly described in this embodiment.

In case that the current block is inter-predicted, the decoding apparatus may induce the first reference block from a correspondence picture within the reference view using a disparity vector of the current block, and induce the second reference block from a reference picture within the reference picture using a motion vector of the current block.

When inducing the second reference block, the decoding apparatus may induce the second reference block using the motion vector of the scaled current block based on a distance between reference pictures that includes the current picture and the second reference block. At the moment, the motion vector of the scaled current block is information transmitted from the encoding apparatus, not a value induced from the decoding apparatus. Accordingly, the decoding apparatus may acquire the motion vector of the scaled current block transmitted from the encoding apparatus by performing entropy decoding.

As described above, in case that a location of the first reference block and the second reference block that are induced is a sub-sample location, the decoding apparatus may perform an interpolation using a bi-linear filter for the first reference block and the second reference block.

In case that the current block is inter-view predicted, the decoding apparatus may induce a correspondence block from the correspondence picture within the reference view using the disparity vector of the current block.

And the decoding apparatus may induce the first reference block from the reference picture within the reference view by using the motion vector of the correspondence block, and induce the second reference block from the reference picture within the current view by using the motion vector of the correspondence block.

When inducing the first reference block, the decoding apparatus may induce the first reference block by using the motion vector of the scaled correspondence block based on a distance between reference pictures that includes the current picture and the first reference block. At the moment, the motion vector of the scaled correspondence block is the information transmitted from the encoding apparatus, not a value induced from the decoding apparatus. Accordingly, the decoding apparatus may acquire the motion vector of the scaled correspondence block transmitted from the encoding apparatus by performing entropy decoding.

In case that the motion vector used for inducing the first reference block is scaled, the second reference block may be induced from the reference picture within the current view by using the scaled motion vector.

As described above, in case that a location of the first reference block and the second reference block that are induced is a sub-sample location, the decoding apparatus may perform an interpolation using a bi-linear filter for the first reference block and the second reference block.

The decoding apparatus generates a residual prediction sample value of the current block based on a difference value between a sample value of the first reference block and a sample value of the second reference block (step, S820).

At the moment, a weighing factor may be applied to the residual prediction sample value of the current block. The weighting factor may be a value either one of 0, 0.5 or 1. The weighting factor 0 may indicate that the residual prediction is not applied. Index information indicating which weighing factor can be applied may be transmitted from the encoding apparatus.

The decoding apparatus induces a prediction sample value of the current block using the residual prediction sample value of the current block (step, S830).

The decoding apparatus may acquire a restoration sample value for the current block based on the induced prediction sample value of the current block.

In the above exemplary systems, although the methods have been described in the form of a series of the steps or blocks, the present invention is not limited to the sequence of the steps, and some of the steps may be performed in different order from other or may be performed simultaneously with other steps. Furthermore, the above-described embodiments include various forms of examples. Accordingly, the present invention should be construed as including all other replacements, modifications, and changes which fall within the scope of the claims.

## Claims

1. A method for encoding a video including a multi-view, comprising:
determining whether to perform a residual prediction on a current block within a current view;
inducing a first reference block and a second reference block used for the residual prediction of the current block, in case that the residual prediction is performed on the current block;
generating a residual prediction sample value of the current block based on a difference value between a sample value of the first reference block and a sample value of the second reference block; and
inducing a prediction sample value of the current block using the residual prediction sample value of the current block,
wherein inducing the first reference block and the second reference block includes scaling a motion vector used for inducing at least one of the first reference block and the second reference block based on a distance between reference pictures including the first reference block or the second reference block and a current picture including the current block.

2. The method for encoding a video of claim 1, further comprising encoding the scaled motion vector.

3. The method for encoding a video of claim 1,
in case that the current block is inter-predicted, wherein inducing the first reference block and the second reference block includes:
inducing the first reference block from a correspondence picture within a reference view using a disparity vector of the current block; and
inducing the second reference block from a reference picture within the reference view using a motion vector of the current block, and
wherein in the step of inducing the second reference block, the second reference block is induced by scaling the motion vector of the current block based on a distance between reference pictures that includes the current picture and the second reference block.

4. The method for encoding a video of claim 1, wherein the correspondence picture is a picture within the reference view that has a picture order count (POC) value which is a same as the current picture, and
wherein the reference picture is a picture within the reference view that has a POC value which is a same as a reference picture of the current block.

5. The method for encoding a video of claim 1,
in case that the current block is inter-view predicted, wherein inducing the first reference block and the second reference block includes:
inducing a correspondence block from a correspondence picture within a reference view using a disparity vector of the current block; and
inducing the first reference block from a reference picture within the reference view using a motion vector of the correspondence block, and
wherein in the step of inducing the first reference block, the first reference block is induced by scaling the motion vector of the correspondence block based on a distance between reference pictures that includes the current picture and the first reference block.

6. The method for encoding a video of claim 5, wherein the correspondence picture is a picture within the reference view that has a picture order count (POC) value which is a same as the current picture, and
wherein the reference picture within the reference view is a picture within the reference view that has a POC value which is a same as a reference picture of the current block.

7. The method for encoding a video of claim 1, wherein the prediction sample value of the current block is induced by applying a weighting factor to the residual prediction sample value of the current block, and
wherein information for the weighting factor is transmitted to a decoding apparatus.

8. A method for decoding a video including a multi-view, comprising:
acquiring residual prediction information that represents whether a residual prediction is performed for a current block within a current view;
inducing a first reference block and a second reference block used for the residual prediction of the current block based on the residual prediction information;
generating a residual prediction sample value of the current block based on a difference value between a sample value of the first reference block and a sample value of the second reference block; and
inducing a prediction sample value of the current block using the residual prediction sample value of the current block,
wherein in the step of inducing the first reference block and the second reference block, at least one of the first reference block and the second reference block are induced using a motion vector which is scaled based on a distance between reference pictures that includes a current picture including the current block and the first reference block or the second reference block, and
wherein the scaled motion vector is acquired from an encoding apparatus.

9. The method for decoding a video of claim 8, further comprising decoding the scaled motion vector.

10. The method for decoding a video of claim 8,
in case that the current block is inter-predicted, wherein inducing the first reference block and the second reference block includes:
inducing the first reference block from a correspondence picture within a reference view using a disparity vector of the current block; and
inducing the second reference block from a reference picture within the reference view using a motion vector of the current block, and
wherein in the step of inducing the second reference block, the second reference block is induced by scaling the motion vector of the current block based on a distance between reference pictures that includes the current picture and the second reference block, and
wherein the motion vector of the scaled current block is acquired from an encoding apparatus.

11. The method for decoding a video of claim 10, wherein the correspondence picture is a picture within the reference view that has a picture order count (POC) value which is a same as the current picture, and
wherein the reference picture is a picture within the reference view that has a POC value which is a same as a reference picture of the current block.

12. The method for decoding a video of claim 8,
in case that the current block is inter-view predicted, wherein inducing the first reference block and the second reference block includes:
inducing a correspondence block from a correspondence picture within a reference view using a disparity vector of the current block; and
inducing the first reference block from a reference picture within the reference view using a motion vector of the correspondence block, and
wherein in the step of inducing the first reference block, the first reference block is induced by scaling the motion vector of the correspondence block based on a distance between reference pictures that includes the current picture and the first reference block, and
wherein the motion vector of the scaled correspondence block is acquired from an encoding apparatus.

13. The method for decoding a video of claim 12, wherein the correspondence picture is a picture within the reference view that has a picture order count (POC) value which is a same as the current picture, and
wherein the reference picture within the reference view is a picture within the reference view that has a POC value which is a same as a reference picture of the current block.

14. The method for decoding a video of claim 8, wherein the prediction sample value of the current block is induced by applying a weighting factor to the residual prediction sample value of the current block, and
wherein information for the weighting factor is transmitted to a decoding apparatus.
